**Europäisches Patentamt**

**European Patent Office**

**Office européen des brevets**

(19)

(11) Publication number : **0 497 546 B1**

(12) # EUROPEAN PATENT SPECIFICATION

(45) Date of publication of patent specification :
**25.05.94 Bulletin 94/21**

(51) Int. Cl.⁵ : **F24C 7/08, A47J 27/62**

(21) Application number : **92300703.3**

(22) Date of filing : **28.01.92**

(54) **Heating apparatus.**

(30) Priority : **29.01.91 JP 27825/91**

(43) Date of publication of application :
**05.08.92 Bulletin 92/32**

(45) Publication of the grant of the patent :
**25.05.94 Bulletin 94/21**

(84) Designated Contracting States :
**DE FR GB**

(56) References cited :
**EP-A- 0 089 247**
**EP-A- 0 106 898**
**DE-A- 3 702 975**
**DE-C- 3 642 181**
**GB-A- 2 211 001**

(56) References cited :
**PATENT ABSTRACTS OF JAPAN, vol. 12, no. 484 (M-776), 16th December 1988; & JP-A-63 201 429 (SANYO ELECTRIC CO., LTD) 19-08-1988**
**IEEE TRANSACTIONS ON CONSUMER ELECTRONICS, vol. CE-33, no. 3, August 1987, pages 136-141, New York, US; R. NARITA: "A new detection method for rice cookers"**

(73) Proprietor : **KABUSHIKI KAISHA TOSHIBA**
**72, Horikawa-cho**
**Saiwai-ku**
**Kawasaki-shi Kanagawa-ken 210 (JP)**

(72) Inventor : **Takagi, Minoru, Nagoya Works, K. K. Toshiba**
**21, Yoshihara-cho 4-chome,**
**Nishi-ku**
**Nagoya (JP)**

(74) Representative : **Freed, Arthur Woolf et al**
**MARKS & CLERK,**
**57-60 Lincoln's Inn Fields**
**London WC2A 3LS (GB)**

EP 0 497 546 B1

## Description

This invention relates generally to a heating apparatus wherein food contained in a cooking chamber is heated by heating means to be cooked, and more particularly to such a heating apparatus with a function of automatically determining the volume of the food to be cooked and controlling the heating means based on the determined volume of the food, according to the preamble of claim 1.

The weight of food to be cooked cannot be automatically determined in conventional heating apparatus in which the food is grilled by a heater. Accordingly, a user needs to determine the weight of the food at a guess and to set a heating operation time period in accordance with the determined weight of the food. Furthermore, another conventional heating apparatus is provided with a setting switch operated for the purpose of entering data of the weight of the food to be cooked and the heating operation period is automatically set based on the entered data. In this case, too, the user needs to determine the food weight at a guess and to enter the data of the determined food weight.

In each above-described conventional arrangement, however, the user needs to determine the food weight at a guess, which is troublesome and increases error in determination, resulting in unsuitable control for the heating operation.

Some types of microwave ovens are provided with a weight sensor mounted on a rotational shaft of a turntable. In these types, the rotational shaft of the turntable is directly coupled to a rotational shaft of a motor driving the turntable and accordingly, the turntable, turntable motor and weight sensor have an integral construction. Consequently, such a weight sensor cannot be applied to a heating apparatus in which the food is grilled and which is not provided with a turntable and the like. Additionally, since the weight sensor itself has a complicate mechanical construction in which the capacity of a capacitor is varied, it would be actually impossible to apply the weight sensor to the heating apparatus without the turntable.

JP-A-63201429 discloses a heating apparatus having a cooking chamber for containing food to be cooked. A microwave heater is provided in the cabinet for heating the food within the cooking chamber. A temperature sensor senses a temperature detection signal representative of the temperature of the food. Temperature rise rate calculating means calculates the rise rate of the temperature after initiation of a heating operation of the heating means based on the temperature detection signal generated by the temperature sensor. Control means controls the heating operation of the heating means based on the output of the calculating means.

Therefore, an object of the present invention is to provide a heating apparatus wherein the volume of the food contained in the cooking chamber can be automatically determined without any mechanically driven member and the heating operation can be controlled based on the result of determination of the food volume.

According to the present invention, there is provided a heating apparatus comprising a cabinet having a cooking chamber for containing food to be cooked and heating means provided in the cabinet for heating the food contained in the cooking chamber, a temperature sensor disposed in the heating apparatus for generating a temperature detection signal, temperature rise rate calculating means for calculating the rise rate of the temperature after initiation of a heating operation of the heating means, based on the temperature detection signals generated by the temperature sensor, and control means for controlling the heating operation of the heating means based on the output of the calculating means, characterized in that the heating is by radiant heat, in that the temperature sensor is disposed in the heating apparatus so as to be responsive to the atmospheric temperature in the cooking chamber, in that there are provided a data storage section storing a volume determining data table containing data of predetermined volumes of foods to be cooked and data of the rise rates of the atmospheric temperature in the cooking chamber corresponding to the respective volumes of the foods to be cooked, volume determining means for collating data of the temperature rise rate obtained by the temperature rise rate calculating means with the data table stored in the data storage section for determining the volume of the corresponding food to be cooked, and in that the control means controls the heating operation of the heating means based on data of the volume of the food to be cooked, which volume is obtained by the volume determining means.

The inventor has found as the result of experiments that the rise rate of the cooking chamber atmospheric temperature rising upon initiation of the heating operation differs depending upon the volume (weight) of the food to be cooked, in the heating apparatus of the type described above. Accordingly, it is theoretically possible to determine the volume of the food to be cooked when the rise rate of the atmospheric temperature in the cooking chamber at an initial stage of the heating operation can be obtained.

In accordance with the heating apparatus of the invention utilizing the above-described finding, the rise rate of the atmospheric temperature in the cooking chamber at the initial stage of the heating operation is calculated by the rise rate calculating means, based on the detection temperature signals generated by the temperature sensor. The volume determining means determines the volume of the food from both the temperature rise rate calculated by the rise rate calculating means and the volume determining data table stored in the data

2

storage section. Thus, the volume of the food to be cooked is automatically determined. Consequently, troublesome operations are not necessary for the determination of the food volume. Since the determination does not rely upon the user's guess, error in the determination can be reduced. furthermore, since the control means controls the heating operation of the heating means in accordance with the result of determination of the suitable food volume by the volume determining means, a suitable control manner can be provided for the heating operation.

The temperature rise rate determining means, data storage section and volume determining means can be composed into electronic circuitry such as a so-called one-chip microcomputer. Consequently, the mechanical composition of the heating apparatus can be simplified.

Preferably, the heating apparatus is further characterized by repeat cooking determining means for comparing, with a predetermined reference value, the temperature detection signal supplied thereto from the temperature sensor after lapse of a predetermined time period from the initiation of the heating operation of the heating means for determining whether or not the heating operation is repeated when the heating operation is initiated and characterized in that the data storage section stores first and second volume determining data tables corresponding to the repeat heating operation and non-repeat heating operation respectively so that either the repeat or non-repeat heating operation is selected based on the result of determination of the repeat cooking determining means for the purpose of determining the volume of the food to be cooked by the volume determining means.

Furthermore, it is preferable that the heating apparatus be further characterized in that the data storage section contains a volume determining data table for each kind of food to be cooked and characterized by specifying means for selecting one of the kinds of foods and specifying the volume determining data table corresponding to the selected kind of food for the purpose of determining the volume of food by the volume determining means.

The invention will be described, merely by way of example, with reference to the accompanying drawings, in which:

FIG. 1 is a schematic longitudinal sectional view of a heating apparatus of an embodiment in accordance with the invention;

FIG. 2 is a block diagram showing an electrical arrangement of the heating apparatus;

FIGS. 3 and 4 are flowcharts showing a control manner for the standard cooking mode;

FIG. 5 is a flowchart showing a part of the control manner for the repeat cooking mode;

FIG. 6 is a flowchart showing a control manner for cooking a food different in the kind from the one cooked in the manner shown in FIG. 3;

FIG. 7 is a flowchart showing a part of the control manner for the repeat cooking executed during the cooking manner shown in FIG. 6;

FIG. 8 is a graph showing experimental changes in the temperatures of foods being cooked in the standard cooking manner;

FIG. 9 is a graph showing experimental changes in the temperatures of foods different in the volume from those in FIG. 8;

FIG. 10 is also a graph showing experimental changes in the temperatures of foods different in the kinds from those in FIG. 8;

FIG. 11 is a graph showing experimental changes in the temperatures of foods different in the volume from those in FIG. 10;

FIG. 12 is a graph showing experimental changes in the temperatures of foods during the repeat cooking;

FIG. 13 is a graph showing experimental changes in the temperatures of foods different in the volume from those in FIG. 12;

FIG. 14 is a graph showing experimental changes in the temperatures of foods different in the kind from those in FIG. 12; and

FIG. 15 is a graph showing experimental changes in the temperatures of foods different in the volume from those in FIG. 14.

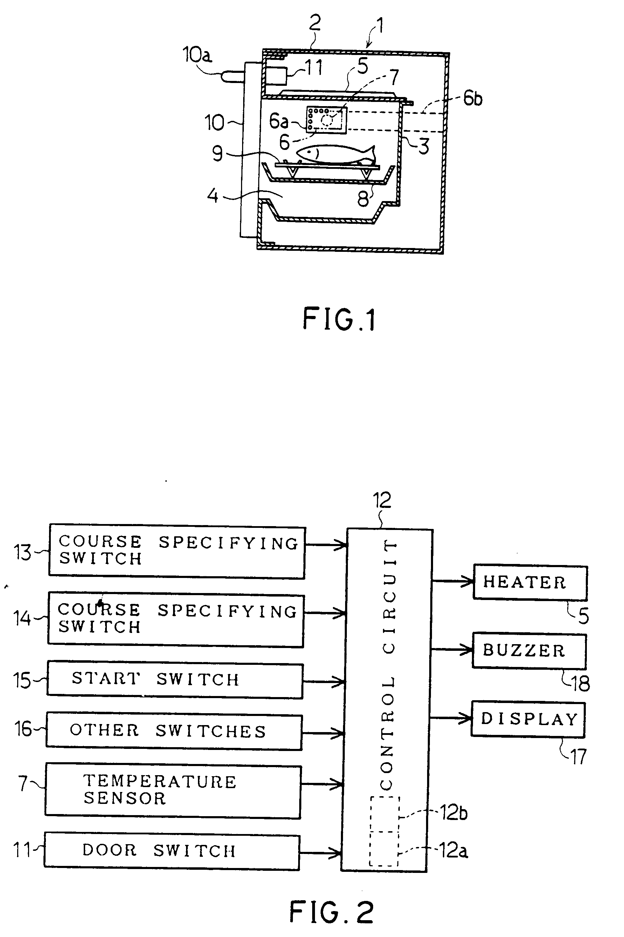

An embodiment of the present invention will now be described. Referring to FIG. 1 schematically showing a heating apparatus of the type in which food is grilled, a cabinet 1 comprises an outer casing 2 and an inner casing 3. A cooking chamber 4 is defined by the inner casing 3. A heater 5 such as a flat heater is mounted on the outside of a ceiling of the inner casing 3. The heater 5 comprises an insulated flat plate and a band-shaped electrical resistor wound around the flat plate. Food contained in the cooking chamber 4 is heated by the heater 5 as will be described later. Exhaust vents 6 are formed in one side wall of the inner casing 3 and a vent cover 6a is attached to the vents 6. A temperature sensor 7 is provided in the vicinity of the vents 6 in an exhaust path 6b communicating the vents 6 to the outside. An atmospheric temperature in the cooking chamber 4 is sensed by the temperature sensor 7, thereby generating a temperature detection signal. A mounting pan 8 is detachably mounted in the cooking chamber 4 and a gridiron 9 is detachably rested on the mounting pan 8. A door 10 is provided to open and close the front side of the cooking chamber 4. The door 10 has a knob 10a which is grasped by a user when the door 10 is opened and closed. A door switch 11 is provided at the inner front of the cabinet 1 for detecting an open and closed states of the door 10, thereby generating a switch signal.

Referring now to FIG. 2, a control circuit 12 includes a microcomputer and an analog-to-digital (A/D) converter. The temperature detection signal generated by the temperature sensor 7 and the switch signal generated by the door switch 11 are supplied to the control circuit 12. Furthermore, switch signals generated by course specifying switches 13 and 14 for specifying the kind of food to be cooked, a start switch 15 for initiating the cooking operation and other various switches 16 are also supplied to the control circuit 12. The course specifying switch 13 is operated to specify a HORSE MACKEREL/MACKEREL PIKE course when the food to be cooked is either a horse mackerel or a mackerel pike, for example. The other course specifying switch 14 is operated to specify a YELLOWTAIL/MACKEREL/SPANISH MACKEREL course when the food to be cooked is any one of a yellowtail, mackerel and Spanish mackerel, for example.

Based on the above-described input signals, the control circuit 12 controls the heater 5, a display 17 and a buzzer 18 in accordance with an operation program. The control circuit 12 is provided with functions of temperature rise rate determining means, volume determining means and control means in accordance with software composition of the operation program. A part of the storage area of a read-only-memory (ROM) employed in the microcomputer incorporated in the control circuit 12 serves as a first data storage section 12a storing data of volume determination. The data of volume determination stored in the first data storage section 12a takes the form of a data table as shown in the following TABLE 1:

TABLE 1

| COOKING MODE | KIND OF FISH | VOLUME DETERMINING REFERENCE VALUE (°C/s) | VOLUME |
|---|---|---|---|
| Standard cooking | Mackerel pike or horse mackerel | 0.240 or above | 2 (300g) |
| | Mackerel pike or horse mackerel | below 0.240 | 4 (600g) |
| | Yellowtail, mackerel or Spanish mackerel | 0.240 or above | 2 slices (200g) |
| | Yellowtail, mackerel or Spanish mackerel | below 0.240 | 4 slices (400g) |
| Repeat cooking | Mackerel pike or horse mackerel | 0.100 or above | 2 (300g) |
| | Mackerel pike or horse mackerel | below 0.100 | 4 (600g) |
| | Yellowtail, mackerel or Spanish mackerel | 0.100 or above | 2 slices (200g) |
| | Yellowtail, mackerel or Spanish mackerel | below 0.100 | 4 slices (400g) |

ROM has another storage area serving as a second data storage section 12b. Data of heating operation stored in the second data storage section 12a takes the form of a data table as shown in the following TABLE 2:

TABLE 2

| KIND OF FISH | VOLUME | COOKING MODE | OPERATION CONTROL MODE |
|---|---|---|---|
| Mackerel pike or horse mackerel | 2 | Standard cooking | Upside grill: 16'44"<br>Backside grill: 7'22" |
| Mackerel pike or horse mackerel | 4 | Standard cooking | Upside grill: 19'00"<br>Backside grill: 8'00" |
| Mackerel pike or horse mackerel | 2 | Repeat cooking | Upside grill: 12'29"<br>Backside grill: 4'23" |
| Mackerel pike or horse mackerel | 4 | Repeat cooking | Upside grill: 13'59"<br>Backside grill: 4'55" |
| Yellowtail, mackerel or Spanish mackerel | 2 slices | Standard cooking | Upside grill: 13'30"<br>Backside grill: 4'30" |
| Yellowtail, mackerel or Spanish mackerel | 4 slices | Standard cooking | Upside grill: 14'30"<br>Backside grill: 5'00" |
| Yellowtail, mackerel or Spanish mackerel | 2 slices | Repeat cooking | Upside grill: 10'13"<br>Backside grill: 4'10" |
| Yellowtail, mackerel or Spanish mackerel | 4 slices | Repeat cooking | Upside grill: 11'05"<br>Backside grill: 4'31" |

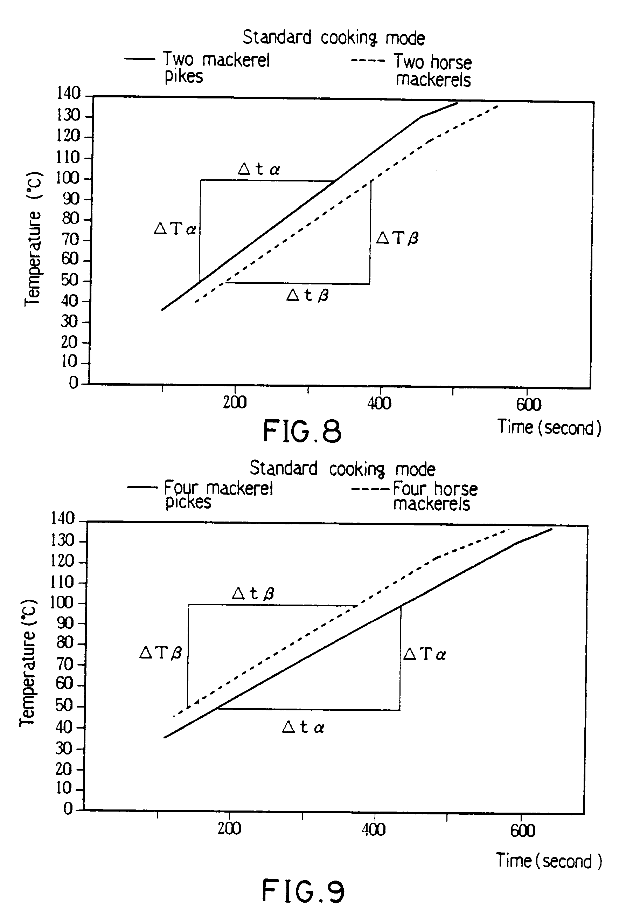

The first data storage section 12a stores data of volume determination for determining the volumes of a mackerel pike, horse mackerel, yellowtail, mackerel and Spanish mackerel as the foods to be cooked. The volume determination data has been obtained from experiments and FIGS. 8 through 15 show experimental data. The data stored in the second data storage section 12b has also been obtained from experiments.

FIG. 8 shows changes in the atmospheric temperatures in the cooking chamber in the case where two mackerel pikes and two horse mackerels are respectively cooked when the heating operation is initiated in the condition that the initial atmospheric temperature in the cooking chamber 4 is at a room temperature. This cooking mode will be referred to as "standard cooking mode." Each mackerel pike and each horse mackerel are 150 grams in weight. The solid line in FIG. 8 denotes the mackerel pikes and the broken line the horse mackerels. As obvious from FIG. 8, a region in which the temperature changes approximately linearly can be found in each case of the mackerel pikes and horse mackerels. The rise rate of each temperature in FIG. 8 has a period of transitional change starting at the initiation of the heating operation, in which period each temperature rise rate is not dependent upon the food volume. Accordingly, the temperature characteristic in this period of transitional change is not shown in FIG. 8. A number of experiments have actually been carried out under the same condition though FIG. 8 shows the temperature changes obtained from one experiment. Consequently, it has been found that the temperature rise rate ($\Delta T\alpha/\Delta t\alpha$) in the case of the mackerel pike and the

temperature rise rate ($\Delta T\beta/\Delta t\beta$) in the case of the horse mackerel are both in the range of 0.240 and 0.270 (°C/s).

Each of FIGS. 9-15 shows experimental data in different conditions in the volume and kind. FIG. 9 shows the temperature changes when four mackerel pikes or horse mackerels are cooked in the standard cooking mode. The rise rate of each temperature in FIG. 9 has a period of transitional change starting at the initiation of the heating operation, in which period each temperature rise rate is not dependent upon the food volume. Accordingly, the temperature characteristic in this region of transition variation is not shown in FIG. 9. The experiment is carried out at a number of times under the same condition as in the case shown in FIG. 9, too. Consequently, it has been found that the temperature rise rate ($\Delta T\alpha/\Delta t\alpha$) in the case of the mackerel pikes and the temperature rise rate ($\Delta T\beta/\Delta t\beta$) in the case of the horse mackerels are both in the range of 0.190 and 0.238 (°C/s). Accordingly, a volume determining reference value in the case of either the mackerel pike or horse mackerel in the standard cooking mode is set so as to discriminate the difference between the temperature rise rate range of 0.240 and 0.270 (°C/s) in the case of two mackerel pikes or horse mackerels and the temperature rise rate range of 0.190 and 0.238 (°C/s) in the case of four mackerel pikes or horse mackerels. The reference value is set to 0.240 (°C/s) in the embodiment, as shown in TABLE 1.

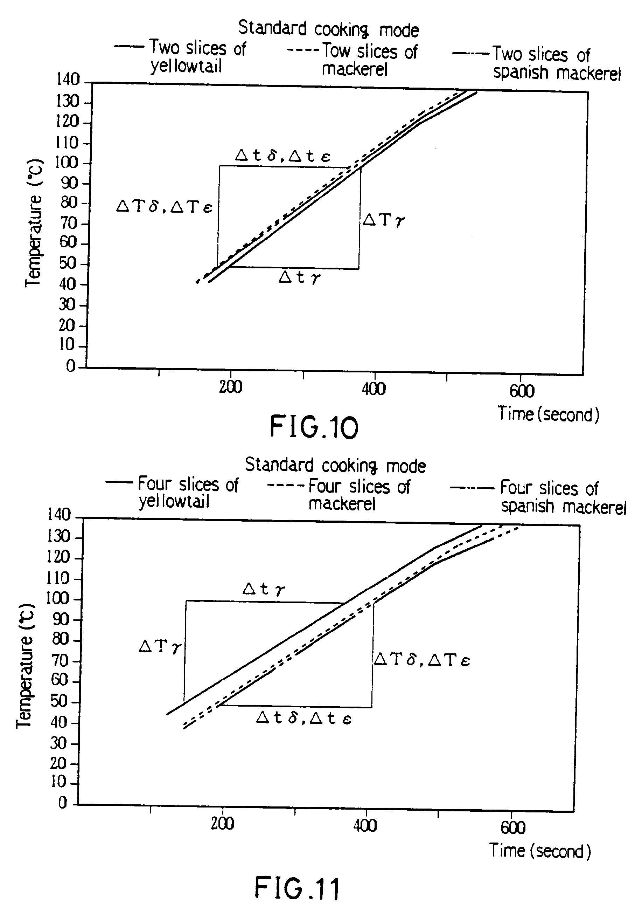

In FIG. 10 the solid line denotes the temperature change in the case of two slices of yellowtail in the standard cooking mode, each piece having the weight of about 100 grams, the broken line the temperature change in the case of two slices of the mackerel, and the two-dot chain line the temperature change in the case of two slices of Spanish mackerel. As the result of a number of times of the experiment, it has been found that the temperature rise rates ($\Delta T\gamma/\Delta t\gamma$), ($\Delta T\delta/\Delta t\delta$) and ($\Delta T\epsilon/\Delta t\epsilon$) in the respective cases of the yellowtail, mackerel and Spanish mackerel are ranged between 0.260 and 0.280 (°C/s).

In FIG. 11 the solid line denotes the temperature change in the case of four slices of yellowtail in the standard cooking mode, the broken line the temperature change in the case of four slices of mackerel, and the two-dot chain line the temperature change in the case of four slices of Spanish mackerel. As the result of a number of times of the experiment, it has been found that the temperature rise rates ($\Delta T\gamma/\Delta t\gamma$), ($\Delta T\delta/\Delta t\delta$) and ($\Delta T\epsilon/\Delta t\epsilon$) in the respective cases of the yellowtail, mackerel and Spanish mackerel are ranged between 0.230 and 0.238 (°C/s). Accordingly, a volume determining reference value in the case of each of the yellowtail, mackerel and Spanish mackerel in the standard cooking is set so as to discriminate the difference between the temperature rise rate range of 0.260 and 0.280 (°C/s) in the case of two slices of each of the yellowtail, mackerel and Spanish mackerel and the temperature rise rate range of 0.230 and 0.238 (°C/s) in the case of four slices of the yellowtail, mackerel and Spanish mackerel. The volume determining reference value is set to 0.240 (°C/s) in the embodiment, for example, as shown in TABLE 1.

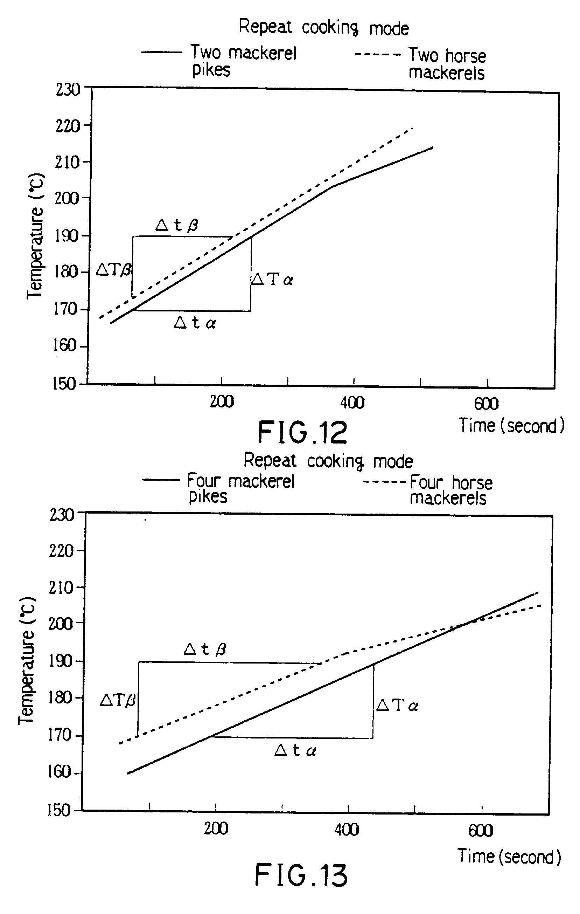

FIG. 12 shows changes in the atmospheric temperatures in the cooking chamber in the cases of two mackerel pikes and two horse mackerels respectively when the heating operation is initiated in the condition that the initial atmospheric temperature in the cooking chamber 4 is high as the result of repeated heating operations. This cooking mode will be referred to as "repeat cooking mode". In the case of FIG. 12, too, the rise rate of each temperature has a period of transitional change starting at the initiation of the heating operation, in which period each temperature rise rate is not dependent upon the food volume. Accordingly, the temperature characteristic in this period of transitional change is not shown in FIG. 12. The experiment is carried out at a number of times under the same condition as in the case shown in FIG. 12, too. Consequently, it has been found that the temperature rise rate ($\Delta T\alpha/\Delta t\alpha$) in the case of the mackerel pike and the temperature rise rate ($\Delta T\beta/\Delta t\beta$) in the case of the horse mackerel are both in the range of 0.110 and 0.150 (°C/s).

FIG. 13 shows changes in the temperatures in the cases of four mackerel pikes and four horse mackerels respectively in the repeat cooking mode. As the result of a number of times of experiment under the same condition, the temperature rise rate ($\Delta T\alpha/\Delta t\alpha$) in the case of the mackerel pikes and the temperature rise rate ($\Delta T\beta/\Delta t\beta$) in the case of the horse mackerels are both in the range between 0.060 and 0.090 (°C/s). Accordingly, a volume determining reference value in the case of either the mackerel pike or horse mackerel is set so as to discriminate the difference between the temperature rise rate range of 0.110 and 0.150 (°C/s) in the case of the two mackerel pikes or horse mackerels and the temperature rise rate range of 0.060 and 0.90 (°C/s) in the case of the four slices of mackerel pikes or horse mackerels. The reference value is set to 0.100 (°C/s) in the embodiment, for example, as shown in TABLE 1.

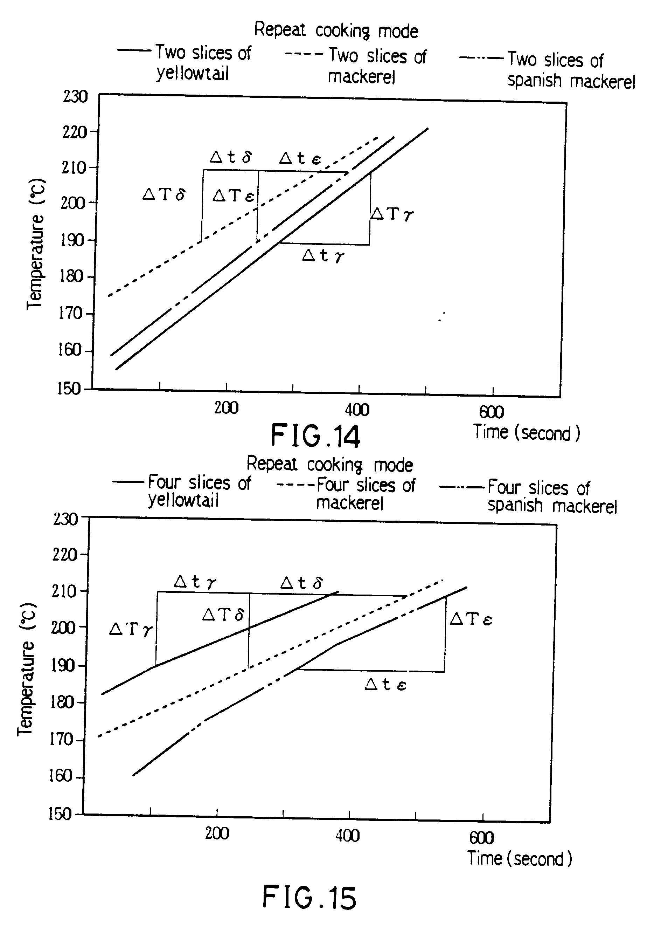

In FIG. 14 the solid line denotes the temperature change in the case of two slices of yellowtail in the repeat cooking mode, the broken line the temperature change in the case of two slices of mackerel, and the two-dot chain line the temperature change in the case of two slices of Spanish mackerel. As the result of a number of times of the experiment, it has been found that the temperature rise rates ($\Delta T\gamma/\Delta t\gamma$), ($\Delta T\delta/\Delta t\delta$) and ($\Delta T\epsilon/\Delta t\epsilon$) in the respective cases of the yellowtail, mackerel and Spanish mackerel are ranged between 0.100 and 0.200 (°C/s).

In FIG. 15 the solid line denotes the temperature change in the case of four slices of yellowtail in the repeat cooking mode, the broken line the temperature change in the case of four slices of mackerel, and the two-dot chain line the temperature change in the case of four slices of Spanish mackerel. As the result of a number of times of experiment, it has also been found that the temperature rise rates $(\Delta T\gamma/\Delta t\gamma)$, $(\Delta T\delta/\Delta t\delta)$ and $(\Delta T\varepsilon/\Delta t\varepsilon)$ in the respective cases of the yellowtail, mackerel and Spanish mackerel are ranged between 0.080 and 0.098 (°C/s).

Accordingly, a reference value for the volume determination in the case of each one of the the yellowtail, mackerel and Spanish mackerel in the repeat cooking mode is set so as to discriminate the difference between the temperature rise rate range of 0.100 and 0.200 (°C/s) in the case of the two slices of the yellowtail, mackerel and Spanish mackerel and the temperature rise rate range of 0.080 and 0.98 (°C/s) in the case of the four slices of yellowtail, mackerel and Spanish mackerel. The reference value is set to 0.100 (°C/s) in the embodiment, for example, as shown in TABLE 1.

The data table shown in TABLE 1 is divided into first and second groups corresponding to the respective standard and repeat cooking modes and furthermore, each group is divided into two subgroups corresponding to the kinds of fishes, mackerel pike or horse mackerel and yellowtail, mackerel or Spanish mackerel, respectively.

In the operation data shown in TABLE 2, the operation control mode is set in accordance with the kind of fish, volume and cooking mode. The upside grill refers to grilling the initial upper face of the fish. Then, the fish is turned over when its backside needs to be grilled. The backside grill refers to grilling the initial lower face of the fish.

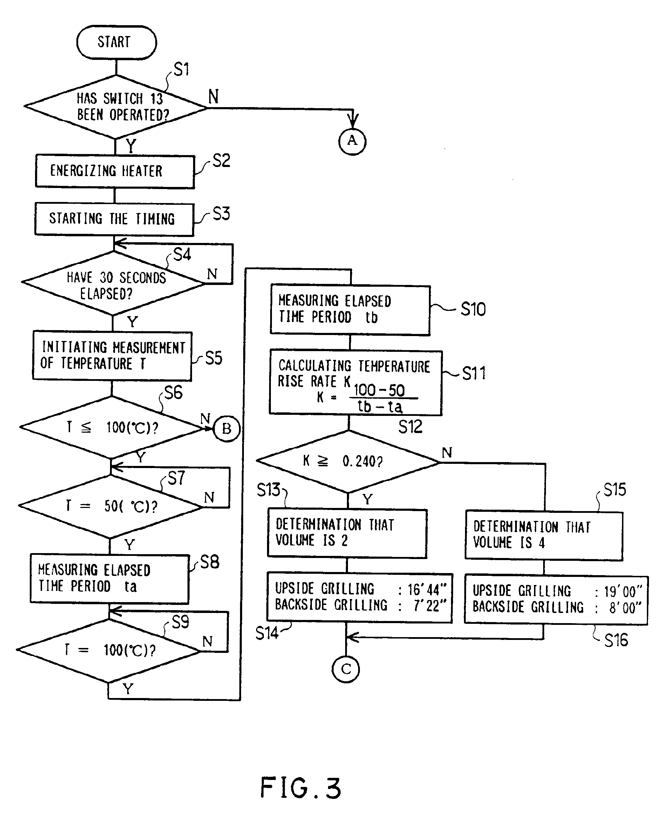

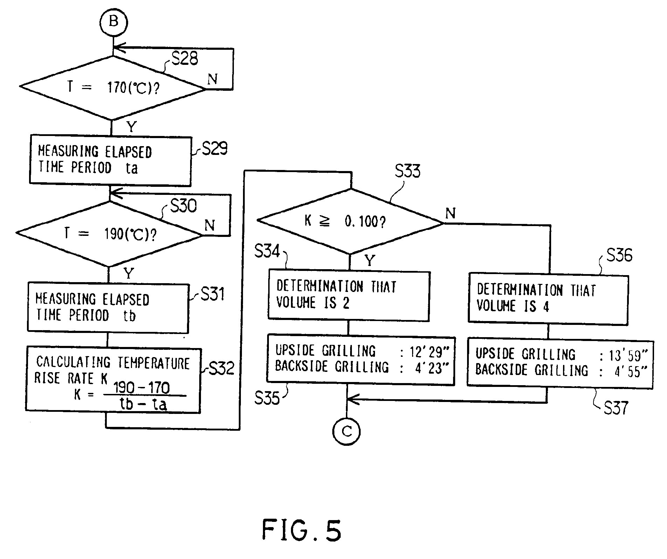

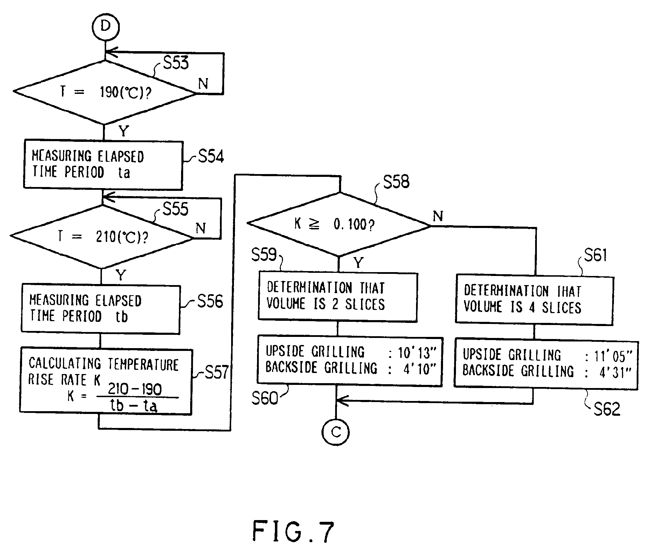

The operation of the heating apparatus will be described with reference to FIGS. 3-7 together with the control manners of the control circuit 12. The flowcharts of FIGS. 3-7 show the contents of the control executed when either one of the course specifying switches 13, 14 and sequentially the start switch are operated. First, the control circuit 12 determines at step S1 which one of the course specifying switches 13, 14 has been operated. The MACKEREL PIKE/HORSE MACKEREL course is executed in steps S2 through S37 when it is determined that the course specifying switch 13 has been operated. More specifically, the heater 5 is energized at step S2 and timing is started at step S3. Upon lapse of thirty seconds at step S4, the control circuit 12 inputs the temperature detection signal generated by the temperature sensor 7 to measure the temperature T at step S5. Whether or not the temperature T is 100°C or below is determined at step S6. This determination is performed so that which of the standard or repeat cooking mode has been established. More specifically, as understood from FIGS. 8-15, the temperature sensed by the temperature sensor 7 is 100°C or below in the standard cooking mode or above 100°C in the repeat cooking mode upon lapse of thirty seconds at step S4, irrespective of the kind of fish and the volume thereof.

An elapsed time period $t_a$ from the time of start of the heating operation or energization of the heater 5 is measured at step S8 when the temperature T reaches a sampling start temperature of 50°C at step S7 in the condition that the temperature sensed by the temperature sensor 7 is 100°C or below or the standard cooking mode has been established. When the temperature T reaches a sampling completion temperature of 100°C at step S9, an elapsed time $t_b$ from the time of start of the heating operation is measured at step S10. The temperature rise rate K is then obtained from the equation, $K=(100-50)/t_b-t_a)$(°C/s), at step S11.

Subsequently, it is determined at step S12 whether or not the obtained temperature rise rate K is a volume determining reference value (0.240 (°C/s)) or above. When the temperature rise rate K is the volume determining reference value or above, it is determined at step S13 that the volume of the fish to be cooked is two (300 grams) based on the volume determining data shown in TABLE 1. A time period for the upside grill is set to "16′44″" and the time period for the backside grill is set to "7′22″" based on the operation control data in TABLE 2, at step S14. When the temperature rise rate K is below the volume determining reference value at step S12, it is determined at step S15 that the volume of the fish to be cooked is four (600 grams) based on the volume determining data in TABLE 1. The time period for the upside grill is set to "19′00″" and that for the backside grill is set to "8′00″" based on the operation control data in TABLE 2, at step S16.

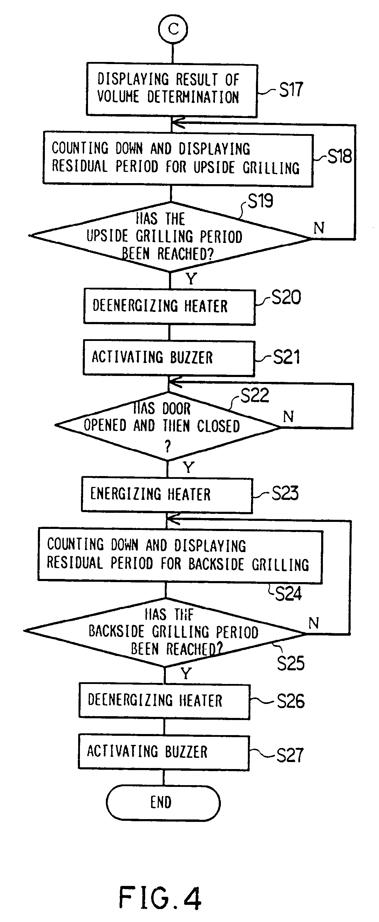

Subsequently, the result of the volume determination is displayed on a first section (not shown) of the display 17 as shown in FIG. 4. The residual time period for the upside grill is counted down until it reaches the set time period and the residual time period is sequentially displayed on a second section (not shown) of the display 17, at steps S18 and S19. When the time period set for the upside grill elapses, the heater 5 is deenergized at step S20 and the buzzer 18 is activated at step S21. The activation of the buzzer 18 informs the user that the surface grill has been completed and the fish needs to be turned over for the backside grill.

The user opens the door 10 to turn over the fish and closes it. The control circuit 12 determines at step S22 that the door 10 has been opened and then closed and operates to energize the heater 5 at step S23. The residual time period for the backside grill is counted down until it reaches the set time period and the residual time period is sequentially displayed on the second section of the display 17, at steps S24 and S25. When the time period set for the backside grill elapses, the heater 5 is deenergized at step S26 and the buzzer 18 is activated at step S27, thereby completing the heating operation. Thus, it is automatically determined that the mackerel pike or horse mackerel is cooked in the standard cooking mode. Furthermore, the volume of the food to be cooked is automatically determined and the heating operation is controlled based on the result of the determination of the volume of the food.

When the temperature T is above 100°C at step S6, it is determined that the repeat cooking mode is established. The control circuit 12 advances to step S28. When the temperature T reaches the sampling start temperature of 170°C at step S28, the elapsed time period $t_a$ from the initiation of the heating operation is measured at step S28. When the temperature T reaches the sampling completion temperature of 190°C at step S30, the elapsed time period $t_b$ from the initiation of the heating operation is measured at step S31. Subsequently, the temperature rise rate K is calculated at step S32. More specifically, the rate K is obtained from the equation, $K=(190-170)/(t_b-t_a)$(°C/s). It is determined at step S33 whether or not the calculated temperature rise rate K is the volume determining reference value (0.100 (°C/s)) or above. When the rate K is the reference value or above, it is determined at step S34 that the volume of the fish as the food to be cooked is two (300 grams) based on the volume determining data in TABLE 1. Based on the operation control data in TABLE 2, the time period for the upside grill is set to "12′29″" and that for the backside grill is set to "4′23″" at step S35.

When the temperature rise rate K is below the volume determining reference value at step S33, it is determined at step S36 that the volume of the fish is four (600 grams) based on the volume determining data in TABLE 1. Based on the operation control data in TABLE 2, the time period for the upside grill is set to "13′59″" and that for the backside grill is set to "4′55″" at step S37. Subsequently, the operation control described above with reference to FIG. 4 is performed. Thus, the repeat cooking mode for cooking the mackerel pike or horse mackerel is automatically selected and the volume of the fish to be cooked is automatically determined. The heating operation is controlled based on the result of determination of the food volume.

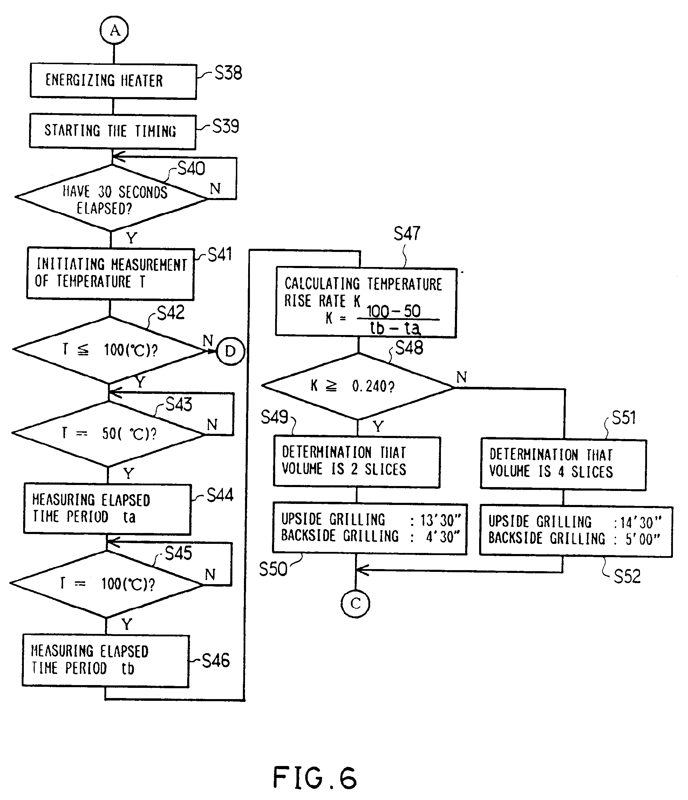

The control circuit 12 advances to step S38 in FIG. 6 to execute the YELLOWTAIL/MACKEREL/SPANISH MACKEREL course when it is determined at step S1 that the course specifying switch 14 has been operated. The control sequence from step S38 to step S47 is controlled in the same manner as in the control sequence from step S2 to step S10 in FIG. 3. More specifically, whether or not the temperature T is 100°C or below is determined at step S42 so that either the standard or repeat cooking mode is established. When it is determined the temperature T is below 100°C, the time period $(t_b-t_a)$ in which the temperature T increases from 50°C to 100°C is calculated at step S42 and the temperature rise rate K is obtained at step S47.

It is determined at step S48 whether or not the obtained temperature rise rate K is the volume determining reference value (0.240 (°C/s)) or above. When the rate K is the reference value or above, it is determined at step S49 that the volume of fish as the food to be cooked is two slices (200 grams) based on the volume determining data in TABLE 1. The time period for the upside grill is set to "13′30″" and that for the backside grill is set to "4′30″" based on the operation control data in TABLE 2, at step S50. When the rate K is below the reference value at step S48, it is determined at step S51 that the volume of the fish is four slices (400 grams) based on the volume determining data in TABLE 1, at step S51. Based on the operation control data in TABLE 2, the time period for the upside grill is set to "14′30″" and that for the backside grill is set to "5′00″" at step S52. Thus, the repeat cooking mode for cooking any one of the yellowtail, mackerel and Spanish mackerel is automatically selected and the volume of the fish to be cooked is automatically determined. The heating operation is controlled based on the result of determination of the food volume.

When the temperature T is above 100°C at step S42, the repeat cooking mode is selected. The control circuit 12 then advances to step S53. It is determined at step S53 whether or not the temperature T has reached the sampling start temperature of 190°C. When it is determined that the temperature T has reached the sampling start temperature, the elapsed time $t_a$ from the initiation of the heating operation is measured at step S54. When the temperature T then reaches the sampling completion temperature of 210°C at step S55, the elapsed time period $t_b$ from the initiation of the heating operation is measured at step S56. Subsequently, the temperature rise rate K is calculated using the equation, $K=(210-190)/(t_b-t_a)$(°C/s), at step S57. It is then determined at step S58 whether or not the calculated temperature rise rate K is the volume determining reference value (0.100 (°C/s)) or above. When the rate K is the reference value or above, it is determined at step S59 that the volume of the fish as the food to be cooked is two slices (200 grams) based on the volume determining data in TABLE 1. Based on the operation control data in TABLE 2, the time period for the upside grill is set to "10′13″" and that for the backside grill is set to "4′10″" at step S60.

When the temperature rise rate K is below the volume determining reference value at step S58, it is determined at step S61 that the volume of the fish is four slices (400 grams) based on the volume determining data in TABLE 1. Based on the operation control data in TABLE 2, the time period for the upside grill is set to "11′50″" and that for the backside grill is set to "4′31″" at step S62. Subsequently, the operation control described above with reference to FIG. 4 is performed. Thus, the repeat cooking mode for cooking any one of the yellowtail, mackerel and Spanish mackerel is automatically selected and the volume of the fish to be cooked is automatically determined. The heating operation is controlled based on the result of determination of the food volume.

As described above, the atmospheric temperature in the cooking chamber rises upon initiation of the heating operation. The temperature rise rate differs depending upon the volume (weight) of the food to be cooked. Consequently, the volume of the food to be cooked can be determined from the rise rate of the atmospheric temperature in the cooking chamber. The following advantages can be obtained from the present invention relying upon the above-described finding that the temperature rise rate differs depending upon the volume of the food to be cooked: the rise rate K of the atmospheric temperature in the cooking chamber 4 at the initial stage of the heating operation is calculated based on the temperatures sensed by the temperature sensor 7. The volume of the food is determined from the obtained temperature rise rate K and the volume determining data. The volume of the food to be cooked is thus determined automatically. Consequently, the user need not be engaged in the troublesome determination of the food volume. Furthermore, since the result of the determination does not rely upon the user's measurement at a guess, the result of the determination contains little error. Additionally, an optimum heating operation control can be provided since the heating operation is controlled by the control circuit 12 based on the optimum result of the determination.

Furthermore, the above-described temperature rise rate calculating means, data storage section and volume determining means can be composed into an electronic circuit such as a so-called one-chip microcomputer. Consequently, the mechanical composition of the heating apparatus can be prevented from being complicated.

In the above-described embodiment, particularly, selecting either the standard or repeat cooking mode can be automatically performed and the heating operation is controlled accordingly, which can provide conveniences in use.

Furthermore, the temperature T is measured, for example, thirty minutes after the initiation of the heating operation but not at the time of the initiation of the heating operation, the period of thirty minutes being necessary for the temperature rise rate to escape from the period of the transitional change. The temperature rise rate K is calculated based on the temperature T thus measured. Consequently, the reliability of the rate K can be improved. More specifically, the temperature change characteristic immediately after initiation of the heating operation has little regularity depending upon the volume of the food. Therefore, when the temperature sampling for calculation of the temperature rise rate K is initiated immediately after initiation of the heating operation, the reliability of the rate K would be reduced. However, this reduction in the reliability of the rate K can be prevented in the present invention.

Although the period in which the temperature T rises from the sampling start temperature to the sampling completion temperature is measured for calculation of the temperature rise rate K in the foregoing embodiment, a rise width of the temperature T in the period between predetermined sampling start and completion times may be measured instead.

## Claims

1. A heating apparatus comprising a cabinet (1) having a cooking chamber (4) for containing food to be cooked and heating means (5) provided in the cabinet (1) for heating the food contained in the cooking chamber (4), a temperature sensor (7) disposed in the heating apparatus for generating a temperature detection signal, temperature rise rate calculating means (12) for calculating the rise rate of the temperature after initiation of a heating operation of the heating means (5), based on the temperature detection signals generated by the temperature sensor (7), and control means (12) for controlling the heating operation of the heating means (5) based on the output of the calculating means (12), characterized in that the heating is by radiant heat, in that the temperature sensor is disposed in the heating apparatus so as to be responsive to the atmospheric temperature in the cooking chamber (4), in that there are provided a data storage section (12a) storing a volume determining data table containing data of predetermined volumes of foods to be cooked and data of the rise rates of the atmospheric temperature in the cooking chamber (4) corresponding to the respective volumes of the foods to be cooked, volume determining means (12) for collating data of the temperature rise rate obtained by the temperature rise rate calculating means (12) with the data table stored in the data storage section (12a) for determining the volume of the corresponding food to be cooked, and in that the control means (12) controls the heating operation of the heating means based on data of the volume of the food to be cooked, which volume is obtained by the volume determining means (12).

2. A heating apparatus according to claim 1, characterized in that the temperature sensor (7) senses the atmospheric temperature in the cooking chamber (4) after lapse of a predetermined time period from the initiation of the heating operation of the heating means (5), in which time period the rise rate of the atmospheric temperature in the cooking chamber (4) escapes from a period of a transitional change in which period the rise rate of the atmospheric temperature in the cooking chamber (4) is independent of the volume of the food to be cooked.

3. A heating apparatus according to claim 1, further characterized by repeat cooking determining means (12) for comparing, with a predetermined reference value, the temperature detection signal supplied thereto from the temperature sensor (7) after lapse of a predetermined time period from the initiation of the cooking operation of the heating means (5) for determining whether or not the heating operation is repeated when the heating operation is initiated and characterized in that the data storage section (12a) stores first and second volume determining data tables corresponding to the repeat heating operation and non-repeat heating operation respectively so that either the repeat or non-repeat heating operation is selected based on the result of determination of the repeat cooking determining means (12) for the purpose of determining the volume of the food to be cooked by the volume determining means (12).

4. A heating apparatus according to claim 1, characterized in that the data storage section (12a) contains a volume determining data table for each kind of food to be cooked and characterized by specifying means (13, 14) for selecting one of the kinds of foods and specifying the volume determining data table corresponding to the selected kind of food for the purpose of determining the volume of food by the volume determining means (12).

5. A heating apparatus according to claim 3, characterized in that the data storage section (12a) contains a volume determining data table for each kind of food to be cooked and characterized by specifying means (13, 14) for selecting one of the kinds of foods and specifying the volume determining data table corresponding to the selected kind of food for the purpose of determining the volume of food by the volume determining means (12).

**Patentansprüche**

1. Erhitzungsgerät mit einem Gehäuse (1), das eine Garkammer (4) zum Aufnehmen von zu garenden Nahrungsmitteln und eine im Gehäuse (1) angeordnete Heizeinrichtung (5) zum Erhitzen der in der Garkammer (4) enthaltenen Nahrungsmittel aufweist, einem im Erhitzungsgerät angeordneten Temperaturfühler (7) zum Erzeugen eines Temperaturmeßsignals, einer Temperaturanstiegsraten-Berechnungseinrichtung (12) zum Berechnen der Anstiegsrate der Temperatur nach Auslösung eines Erhitzungsvorgangs der Heizeinrichtung (5) auf der Grundlage der vom Temperaturfühler (7) erzeugten Temperaturmeßsignale und einer Steuereinrichtung (12) zur Steuerung des Erhitzungsvorgangs der Heizeinrichtung (5) auf der Grundlage des Ausgangssignals der Berechnungseinrichtung (12), gekennzeichnet dadurch, daß das Erhitzen durch Strahlungswärme erfolgt, dadurch, daß der Temperaturfühler (7) so in dem Erhitzungsgerät angeordnet ist, daß er auf die Lufttemperatur in der Garkammer (4) anspricht, dadurch, daß bereitgestellt werden: ein Datenspeicherbereich (12a), der eine Volumenbestimmungs-Datentabelle speichert, die Daten vorbestimmter Volumen von zu garenden Nahrungsmitteln und Daten der Anstiegsraten der Lufttemperatur in der Garkammer (4), die den jeweiligen Volumen der zu garenden Nahrungsmittel entsprechen, enthält, eine Volumenbestimmungseinrichtung (12) zum Vergleichen der Daten der von der Temperaturanstiegsraten-Berechnungseinrichtung (12) ermittelten Temperatur-Anstiegsrate mit der im Datenspeicherbereich (12a) gespeicherten Datentabelle zur Bestimmung des Volumens der entsprechenden zu garenden Nahrungsmittel, und dadurch, daß die Steuereinrichtung (12) den Erhitzungsvorgang der Heizeinrichtung (5) auf der Grundlage der Daten des Volumens der zu garenden Nahrungsmittel steuert, welches Volumen durch die Volumenbestimmungseinrichtung (12) ermittelt worden ist.

2. Erhitzungsgerät nach Anspruch 1, dadurch gekennzeichnet, daß der Temperaturfühler (7) die Lufttemperatur in der Garkammer (4) nach Verstreichen eines vorbestimmten Zeitabschnitts ab der Auslösung des Erhitzungsvorgangs der Heizeinrichtung (5) erfaßt, in welchem Zeitabschnitt die Anstiegsrate der Lufttemperatur in der Garkammer (4) nicht in einem Abschnitt einer Übergangsänderung verbleibt, in welchem Abschnitt die Anstiegsrate der Lufttemperatur in der Garkammer (4) unabhängig vom Volumen der zu garenden Nahrungsmittel ist.

3. Erhitzungsgerät nach Anspruch 1, ferner gekennzeichnet durch eine Garwiederholungs-Bestimmungseinrichtung zum Vergleichen des vom Temperaturfühler (7) an dieselbe übergebenen Temperaturmeßsignals nach Verstreichen eines vorbestimmten Zeitabschnitts ab der Auslösung des Erhitzungsvorgangs der Heizeinrichtung (5) mit einem vorbestimmten Vergleichswert, um festzustellen, ob der Erhitzungsvorgang wiederholt wird oder nicht, wenn der Erhitzungsvorgang ausgelöst wird, und dadurch gekennzeichnet, daß der Datenspeicherbereich (12a) eine erste und eine zweite Volumenbestimmungs-Datentabelle speichert, die dem Wiederholungs-Erhitzungsvorgangbzw. demNichtwiederholungs-Erhitzungsvorgangentsprechen, so daß auf der Grundlage der Bestimmung der Garwiederholungs-Bestimmungseinrichtung (12) entweder der Wiederholungs-Erhitzungsvorgang oder der Nichtwiederholungs-Erhitzungsvorgang zum Zweck des Bestimmens des Volumens der zu garenden Nahrungsmittel durch die Volumenbestimmungseinrichtung (12) ausgewählt wird.

4. Erhitzungsgerät nach Anspruch 1, dadurch gekennzeichnet, daß der Datenspeicherbereich (12a) eine Volumenbestimmungs-Datentabelle für jede Sorte von zu garenden Nahrungsmitteln enthält, und gekennzeichnet durch Festlegungseinrichtungen (13, 14) zum Auswählen von einer der Sorten von Nahrungsmitteln und Festlegen derjenigen Volumenbestimmungs-Datentabelle, die der ausgewählten Sorte von Nahrungsmitteln entspricht, zum Zweck des Bestimmens des Volumens der Nahrungsmittel durch die Volumenbestimmungseinrichtung (12).

5. Erhitzungsgerät nach Anspruch 3, dadurch gekennzeichnet, daß der Datenspeicherbereich (12a) eine Volumenbestimmungs-Datentabelle für jede Sorte von zu garenden Nahrungsmitteln enthält, und gekennzeichnet durch Festlegungseinrichtungen (13, 14) zum Auswählen von einer der Sorten von Nahrungsmitteln und Festlegen derjenigen Volumenbestimmungs-Datentabelle, die der ausgewählten Sorte von Nahrungsmittel entspricht, zum Zweck des Bestimmens des Volumens der Nahrungsmittel durch die Volumenbestimmungseinrichtung (12).

## Revendications

1. Appareil de chauffage comprenant une enceinte (1) comportant une chambre de cuisson (4) destinée à contenir un aliment qui doit être cuit et un moyen de chauffage (5) prévu dans l'enceinte (1) pour chauffer l'aliment contenu dans la chambre de cuisson (4), un détecteur de température (7) disposé dans l'appareil de chauffage pour générer un signal de détection de température, un moyen de calcul de taux d'augmentation de température (12) pour calculer le taux d'augmentation de la température après le démarrage d'une opération de chauffage du moyen de chauffage (5), sur la base des signaux de détection de température générés par le détecteur de température (7), et un moyen de commande (12) pour commander l'opération de chauffage du moyen de chauffage (5) sur la base de la sortie du moyen de calcul (12), caractérisé en ce que le chauffage est réalisé au moyen d'une chaleur rayonnante, en ce que le détecteur de température est disposé dans l'appareil de chauffage de manière à être sensible à la température de l'atmosphère qui règne dans la chambre de cuisson (4), en ce que sont prévues une section de stockage de données (12a) qui stocke une table de données de détermination de volume contenant des données de volume prédéterminées des aliments qui doivent être cuits et des données des taux d'augmentation de la température de l'atmosphère qui règne dans la chambre de cuisson (4) correspondant aux volumes respectifs des aliments qui doivent être cuits, un moyen de détermination de volume (12) pour collationner des données du taux d'augmentation de température obtenues à l'aide du moyen de calcul de taux d'augmentation de température (12) avec la table de données stockées dans la section de stockage de données (12a) pour déterminer le volume de l'aliment correspondant qui doit être cuit et en ce que le moyen de commande (12) commande l'opération de chauffage du moyen de chauffage sur la base des données du volume de l'aliment qui doit être cuit, lequel volume est obtenu à l'aide du moyen de détermination de volume (12).

2. Appareil de chauffage selon la revendication 1, caractérisé en ce que le détecteur de température (7) détecte la température de l'atmosphère qui règne dans la chambre de cuisson (4) après l'écoulement d'une période temporelle prédéterminée à partir du démarrage de l'opération de chauffage du moyen de chauffage (5), période temporelle pendant laquelle le taux d'augmentation de la température de l'atmosphère qui règne dans la chambre de cuisson (4) quitte une période de variation de transition, période pendant laquelle le taux d'augmentation de la température de l'atmosphère qui règne dans la chambre de cuisson (4) est indépendant du volume de l'aliment qui doit être cuit.

3. Appareil de chauffage selon la revendication 1, caractérisé en outre par un moyen de détermination de cuisson à répétition (12) pour comparer, à une valeur de référence prédéterminée, le signal de détection de température qui lui est appliqué depuis le détecteur de température (7) après l'écoulement d'une période temporelle prédéterminée à partir du démarrage de l'opération de cuisson du moyen de chauffage (5) pour déterminer si oui ou non l'opération de chauffage est à répétition lorsque l'opération de chauffage est démarrée et caractérisé en ce que la section de stockage de données (12a) stocke des première et seconde tables de données de détermination de volume correspondant respectivement à l'opération de chauffage à répétition et à l'opération de chauffage à non répétition de telle sorte que soit l'opération de chauffage à répétition soit l'opération de chauffage à non répétition soit choisie sur la base du résultat de la détermination du moyen de détermination de cuisson à répétition (12) dans le but de déterminer le volume de l'aliment qui doit être cuit à l'aide du moyen de détermination de volume (12).

4. Appareil de chauffage selon la revendication 1, caractérisé en ce que la section de stockage de données (12a) contient une table de données de détermination de volume pour chaque type d'aliment qui doit être cuit et caractérisé par un moyen de spécification (13, 14) pour sélectionner l'un des types d'aliments et pour spécifier la table de données de détermination de volume correspondant au type sélectionné d'aliments dans le but de déterminer le volume de l'aliment à l'aide du moyen de détermination de volume (12).

5. Appareil de chauffage selon la revendication 3, caractérisé en ce que la section de stockage de données (12a) contient une table de données de détermination de volume pour chaque type d'aliments qui doit être cuit et caractérisé par un moyen de spécification (13, 14) pour sélectionner l'un des types d'aliments et pour spécifier la table de données de détermination de volume correspondant au type sélectionné d'aliments dans le but de déterminer le volume de l'aliment à l'aide du moyen de détermination de volume (12).

FIG.1

| 13 | COURSE SPECIFYING SWITCH |
| 14 | COURSE SPECIFYING SWITCH |
| 15 | START SWITCH |
| 16 | OTHER SWITCHES |
| 7 | TEMPERATURE SENSOR |
| 11 | DOOR SWITCH |

CONTROL CIRCUIT 12

HEATER 5

BUZZER 18

DISPLAY 17

12b
12a

FIG.2

START

S1
HAS SWITCH 13 BEEN OPERATED? —N→ (A)

Y

S2
ENERGIZING HEATER

S3
STARTING THE TIMING

S4
HAVE 30 SECONDS ELAPSED? —N

Y

S5
INITIATING MEASUREMENT OF TEMPERATURE T

S6
$T \leq 100(°C)?$ —N→ (B)

Y

S7
$T = 50(°C)?$ —N

Y

S8
MEASURING ELAPSED TIME PERIOD ta

S9
$T = 100(°C)?$ —N

Y

S10
MEASURING ELAPSED TIME PERIOD tb

S11
CALCULATING TEMPERATURE RISE RATE K
$$K = \frac{100-50}{tb-ta}$$

S12
$K \geq 0.240?$ —N

Y

S13
DETERMINATION THAT VOLUME IS 2

S15
DETERMINATION THAT VOLUME IS 4

S14
UPSIDE GRILLING : 16'44"
BACKSIDE GRILLING : 7'22"

S16
UPSIDE GRILLING : 19'00"
BACKSIDE GRILLING : 8'00"

(C)

FIG.3

14

FIG.4

(B)

S28

T = 170(℃)?   N

Y

MEASURING ELAPSED
TIME PERIOD ta   S29

S30

T = 190(℃)?   N

Y

MEASURING ELAPSED
TIME PERIOD tb   S31

CALCULATING TEMPERATURE
RISE RATE K   S32
$$K = \frac{190 - 170}{tb - ta}$$

S33

K ≧ 0.100?   N

S34   Y   S36

DETERMINATION THAT
VOLUME IS 2

DETERMINATION THAT
VOLUME IS 4

UPSIDE GRILLING : 12'29"
BACKSIDE GRILLING : 4'23"

UPSIDE GRILLING : 13'59"
BACKSIDE GRILLING : 4'55"

S35   S37

(C)

FIG.5

Ⓐ

ENERGIZING HEATER —S38

STARTING THE TIMING —S39

S40

HAVE 30 SECONDS ELAPSED? —N

Y

INITIATING MEASUREMENT OF TEMPERATURE T —S41

S42

T ≦ 100(℃)? —N— Ⓓ

Y

S43

T = 50(℃)? —N

Y

MEASURING ELAPSED TIME PERIOD ta —S44

S45

T = 100(℃)? —N

Y

MEASURING ELAPSED TIME PERIOD tb —S46

S47

CALCULATING TEMPERATURE RISE RATE K
$$K = \frac{100 - 50}{tb - ta}$$

S48

K ≧ 0.240? —N

Y

S49

DETERMINATION THAT VOLUME IS 2 SLICES

S51

DETERMINATION THAT VOLUME IS 4 SLICES

UPSIDE GRILLING : 13'30"
BACKSIDE GRILLING : 4'30"

UPSIDE GRILLING : 14'30"
BACKSIDE GRILLING : 5'00"

S50

S52

Ⓒ

FIG.6

17

FIG.7

FIG.8

FIG.9

Standard cooking mode

—— Two slices of    ---- Tow slices of    —··— Two slices of
yellowtail              mackerel               spanish mackerel

FIG.10

Standard cooking mode

—— Four slices of    ---- Four slices of    —··— Four slices of
yellowtail              mackerel               spanish mackerel

FIG.11

FIG.12

FIG.13

FIG.14

FIG.15